# EUROPÄISCHE PATENTSCHRIFT

(11) **EP 3 208 183 B1**
(45) Veröffentlichungstag und Bekanntmachung des Hinweises auf die Patenterteilung: **25.03.2020**
(21) Anmeldenummer: 17157369.4
(22) Anmeldetag: 22.02.2017
(51) Int. Cl.: B62J 1/02, B62J 1/04, B62J 1/08

(54) **SATTELLAGERVORRICHTUNG**
SADDLE BEARING DEVICE
DISPOSITIF DE PALIER DE SELLE

(30) Priorität: 22.02.2016 DE 102016002067
(43) Veröffentlichungstag der Anmeldung: 23.08.2017
(73) Patentinhaber: Langstädtler, Iris-Sabine, 28309 Bremen (DE)
(72) Erfinder: Langstädtler, Iris-Sabine, 28309 Bremen (DE)
(74) Vertreter: Philipp, Matthias

(56) Entgegenhaltungen:
- EP-A1- 2 825 441
- WO-A1-2014/078185
- WO-A2-2005/032926
- DE-A1-102004 021 795
- DE-C- 90 835
- DE-U1- 20 212 353
- KR-A- 20110 040 608
- US-A1- 2004 239 159
- US-A1- 2007 262 623

## Beschreibung

### GEBIET

Die vorliegende Erfindung bezieht sich auf eine Sattellagervorrichtung. Insbesondere bezieht sich die vorliegende Erfindung auf eine Sattellagervorrichtung, umfassend ein Sattelverbindungselement, ausgebildet zum Verbinden eines Sattels, auf dem eine Person sitzen kann, mit der Sattellagervorrichtung, und ein Rahmenverbindungselement, ausgebildet zum Verbinden der Sattellagervorrichtung mit einem Rahmen eines Sportgeräts, etwa eines Trainingsgeräts oder eines den Bewegungsablauf beim Fahrradfahren nachbildenden Geräts wie Hometrainers, Ergometers, Fahrrads oder allgemein eines Zweirads.

### HINTERGRUND

Ein Sattel bildet eine Sitzauflage für eine bspw. ein Zweirad fahrende Person. Zur Verbindung des Sattels mit einem Rahmen eines Sportgeräts wird oftmals eine Sattelstütze als Rahmenverbindungselement verwendet, welche beispielsweise aus einem Rohr besteht, das in den Rahmen eingeschoben werden kann, und ein Sattelverbindungselement, an dem der Sattel befestigt werden kann und das eine Verbindung zwischen Sattel und Rahmenverbindungselement herstellt. Zur Steigerung des Komforts beim Fahren sind zudem Sattelstützen bekannt, die über eine Federung verfügen, welche beim Fahren durch Unebenheiten in der Fahrbahn entstehende Stöße federt und ggf. dämpft. WO 2014/078185 A1 offenbart die Merkmale des Oberbegriffs des Anspruchs 1.

### ZUSAMMENFASSUNG

Eine Sattellagervorrichtung nach Anspruch 1 umfasst ein Sattelverbindungselement, ausgebildet zum Verbinden eines Sattels, auf der eine Person sitzen kann, mit der Sattellagervorrichtung, ein Rahmenverbindungselement, ausgebildet zum Verbinden der Sattellagervorrichtung mit einem Rahmen eines Sportgeräts, und ein Lagerelement, welches das Sattelverbindungselement mit dem Rahmenverbindungselement koppelt. Das Lagerelement bildet mindestens zwei senkrecht zueinander angeordnete, sich in einem Punkt schneidende Drehachsen, um die sich das Sattelverbindungselement relativ zum Rahmenverbindungselement drehen kann. In einer ersten Variante ist in Gebrauchsstellung eine erste Drehachse horizontal und in Fahrtrichtung angeordnet und eine zweite Drehachse ist horizontal und quer zur Fahrtrichtung angeordnet. Bei einem ortsfest zu benutzenden Sportgerät entspricht die Fahrtrichtung einer Blickrichtung einer auf dem Sattel sitzenden Person, oder einer Geradeaus-Richtung des Sattels.

In einer anderen Variante kann vorgesehen sein, dass eine erste Drehachse horizontal und in Fahrtrichtung und eine zweite Drehachse vertikal angeordnet ist. In einer weiteren Variante kann eine erste Drehachse horizontal und quer zur Fahrtrichtung und eine zweite Drehachse vertikal angeordnet sein.

Das Rahmenverbindungselement kann eine ein rohrförmiges Element aufweisende Konstruktion sein, wobei das rohrförmige Element dazu geformt und eingerichtet ist, in ein entsprechendes Aufnahmerohr oder eine Halterung eines Geräte- oder Zweiradrahmens eingeschoben zu werden. Als Zweiradrahmen wird in diesem Zusammenhang auch eine Konstruktion angesehen, welche stationär zu Trainingszwecken verwendet wird. Die Drehachsen des Lagerelements ermöglichen in diesem Kontext, dass ein mit dem erfindungsgemäßen Sattelverbindungselement verbundener Sattel während der Benutzung oder des Fahrens eines mit der Sattellagervorrichtung versehenen Sportgeräts eine nichtlineare Bewegung relativ zum Rahmen ausführt. Dadurch werden zusätzliche Muskelgruppen beansprucht. Zudem können in einem Fahrzustand durch Unebenheiten in einer Fahrbahn entstehende Stöße besser gedämpft werden, da die Möglichkeit einer nichtlinearen Bewegung einen zusätzlichen Spielraum für das Abfangen der Stöße schafft. Ferner wird ein Schulterblick vereinfacht und dadurch die Sicherheit beim Fahren eines Fahrrads oder Zweirads erhöht. Zudem wird ein Balancieren mit einem Zweirad auf kleinstem Raum ermöglicht, da ein Einsatz der Hüfte ermöglicht wird.

Das Lagerelement bildet eine dritte Drehachse, die senkrecht zu den ersten und zweiten Drehachsen verläuft und bei der vorstehend genannten ersten Variante vertikal angeordnet ist.

Durch die zueinander senkrecht stehenden Drehachsen wird die Sattelbewegung gleichmäßiger, wodurch die Beanspruchung zusätzlicher Muskelgruppen und die Möglichkeit Stöße zu dämpfen weiter verbessert wird. Jeder Drehachse kann ein vorgegebener größter Drehwinkelbereich zugeordnet sein, bspw. höchstens - /+ 10°, 20°, 30°. Jeder Drehachse kann eine progressiv stärker werdende Rückstellkraft zugeordnet sein, bspw. mittels einer jeweiligen Rückstellfeder, und es kann ein fester Anschlag zur Begrenzung des Drehwinkelbereichs vorgesehen sein.

Das Lagerelement weist ein Kugelgelenk auf.

Vorzugsweise umfasst die Sattellagervorrichtung ferner ein oder mehrere um eine, zwei oder drei Drehachsen wirkende(s) Rückstellelement(e), welche(s) an dem Sattelverbindungselement und dem Rahmenverbindungselement befestigt und dazu eingerichtet ist (sind), das Sattelverbindungselement relativ zum Rahmenverbindungselement in einer Ruhelage zu halten. Die Ruhelage ist bevorzugt horizontal.

Durch das Rückstellelement wird die Stabilität beim Fahren erhöht, indem Auslenkungen des Sattels von der Ruhelage entgegengewirkt wird oder diese ggf. zusätzlich begrenzt werden.

Vorzugsweise umfasst das Rückstellelement mindestens ein Federelement als Rückstellfeder.

In einer Ausführungsform umfasst das Federelement mindestens eine Zugfeder.

In einer weiteren Ausführungsform umfasst das Federelement mindestens eine Druckfeder oder Kegelfeder, aus Metall oder Elastomer, insbesondere Polymer, und umschließt insbesondere einen Teil des Rahmenverbindungselements in einer Umfangsrichtung.

Vorzugsweise umfasst die Sattellagervorrichtung ferner ein weiteres Rückstellelement, wobei das weitere Rückstellelement als Zugfeder, insbesondere als Stahlzugfeder ausgebildet ist

Die Sattellagervorrichtung umfasst bevorzugt einen Sattel.

### KURZBESCHREIBUNG DER ZEICHNUNGEN

Die vorliegende Erfindung wird im Folgenden anhand von Ausführungsbeispielen erläutert, wobei auf eine Zeichnung Bezug genommen wird, in der:
Fig. 1 eine Seitenansicht einer ersten Ausführungsform einer Sattellagervorrichtung mit einem Sattel zeigt, und
Fig. 2 einen Teilschnitt einer zweiten Ausführungsform einer Sattellagervorrichtung zeigt, und
Fig. 3 eine teilweise geschnittene Seitenansicht einer dritten Ausführungsform einer Sattellagervorrichtung zeigt.

### DETAILLIERTE BESCHREIBUNG

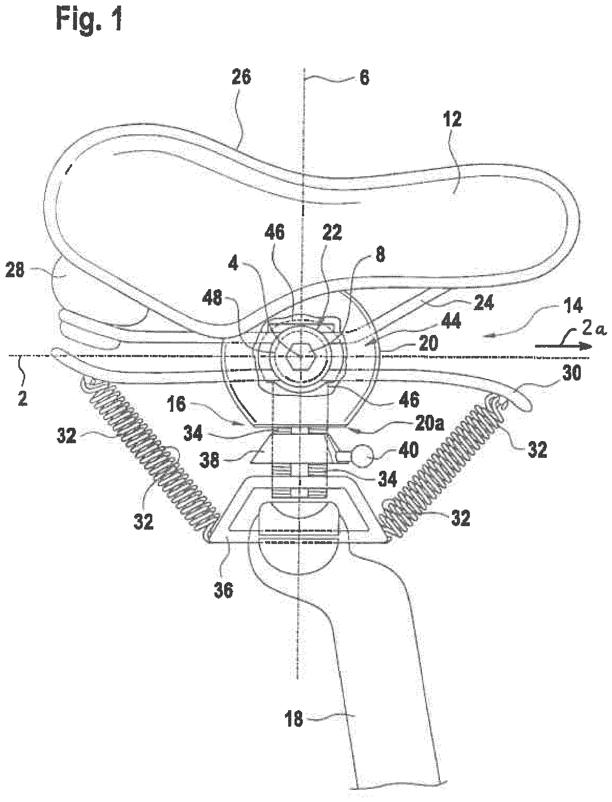

Fig. 1 zeigt eine Seitenansicht einer ersten Ausführungsform einer Sattellagervorrichtung 14 mit einem Sattel 12. Die Sattellagervorrichtung 14 umfasst ein Sattelverbindungselement 16, ausgebildet zum Verbinden des Sattels 12 mit der Sattellagervorrichtung 14. Ferner umfasst die Sattellagervorrichtung 14 ein Rahmenverbindungselement 18 (Sattelstütze), ausgebildet zum Verbinden der Sattellagervorrichtung 14 mit einem Rahmen eines Zweirads. Die Sattellagervorrichtung 14 weist ferner eine nach unten entlang eines Rands 20a offene kugelförmige Außenschale 20 sowie ein innenliegendes Kugelgelenk 44 auf, die ein Lagerelement bildet und das Sattelverbindungselement 16 relativ zum Rahmenverbindungselement 18 um den Mittelpunkt einer Kugel 48 des Kugelgelenkes 44 drehbar lagert. Die Außenschale 20 dient der Abdeckung des Kugelgelenks und ist mit der Kugel 48 verbunden. Außerhalb der Außenschale 20 sind zwei Verbindungselemente 22 in Form zweier Sattelkloben mit einem Bolzen 8 an der Kugel 48 befestigt, die jeweils zwei Klemmstellen aufweisen. Das Kugelgelenk ermöglicht eine Drehung des Sattelverbindungselements 16 und damit des Sattels 12 relativ zu dem Rahmenverbindungselement 18 und eine erste horizontale, in Fahrtrichtung 2a verlaufende Drehachse 2, eine zweite horizontale, dazu senkrechte Drehachse 4 und eine dritte, vertikale Drehachse 6. Alle Drehachsen schneiden sich im Mittelpunkt der Kugel 48. Der Bolzen 8 verläuft durch die Kugel 48 und entlang der zweiten Drehachse 4.

Mittels jeweils einer oberen der beiden Klemmstellen ist ein Satteluntergestell 24 des Sattels 12 an der Kugel 48 befestigt. Das Satteluntergestell 24 bildet zusammen mit einer Sitzfläche 26 und einer (Polymer-)Federung 28, die an einem hinteren Ende des Satteluntergestells 24 angeordnet ist und die Sitzfläche 26 des Sattels 12 relativ zum Satteluntergestell 24 abstützt, den Sattel 12. Die Sitzfläche 26 des Sattels 12 kann ferner einen Bezug aus Naturmaterial oder Kunststoff und insbesondere aus einem synthetischen Gewebe umfassen, welcher über ein Formelement gespannt ist, das durch die Federung 28 und das Satteluntergestell 24 gestützt wird. Zwischen dem Bezug und dem Formelement kann des Weiteren eine Polsterung vorgesehen sein.

Mittels der jeweils anderen, unteren der Klemmstellen der Sattelkloben 22 ist ein Fixierbügel 30 mit der Kugel 48 verbunden. Der Fixierbügel 30 kann horizontal verlaufen oder, wie in Fig. 1 gezeigt, eine von der Seite gesehen geschwungene Form oder eine leichte S-Form mit einem ansteigenden hinteren Ende und einem abfallenden vorderen Ende aufweisen und an jedem Ende mit einem Rückstellelement, wie insbesondere den gezeigten Federelementen 32 verbunden sein. Die Fixierbügel 30 werden durch die (Zug-)Federelemente 32, welche mit ihren anderen Enden jeweils paarweise vorn und hinten an dem Rahmenverbindungselement 18 (Sattelstütze) befestigt sind, relativ dazu in einer horizontalen Ruhelage gehalten. Die Federelemente 32 sind bevorzugt vorgespannt. Die paarweise Anordnung der Federelemente, je links und rechts und vorn und hinten, bewirkt Rückstellkräfte in Richtung der horizontalen Ruhelage des Sattels in Bezug auf die erste und zweite Drehachse 2, 4 und auch in Bezug auf die dritte Drehachse 6. Durch die Verbindung der Fixierbügel 30 mit der Kugel 48 wird somit der Sattel 12 relativ zum Rahmenverbindungselement 18 in Ruhelage gehalten.

Der die Kugel 48 drehbar aufnehmende Gelenkkopf 46 des Kugelgelenks 44 ist mittels einer Gewindestange 34 mit einem Adapter 36 verbunden, mittels dessen die Federelemente 32 am Rahmenverbindungselement 18 befestigt sind. Der Bewegungs- bzw. Schwenkbereich der Kugel 48 relativ zur Gewindestange 34 kann durch die Außenschale 20 mittels eines mit Innengewinde versehenen, auf der Gewindestange 34 verstellbaren Keilelements 38 begrenzt werden, welches durch einen Blockierbolzen 40 in verschiedenen Abständen von der Außenschale 20 bzw. deren Rand 20a fixiert werden kann und bei einem bestimmten Auslenkwinkel mit der Außenschale in Kontakt kommt und eine weitere Verschwenkung blockiert.

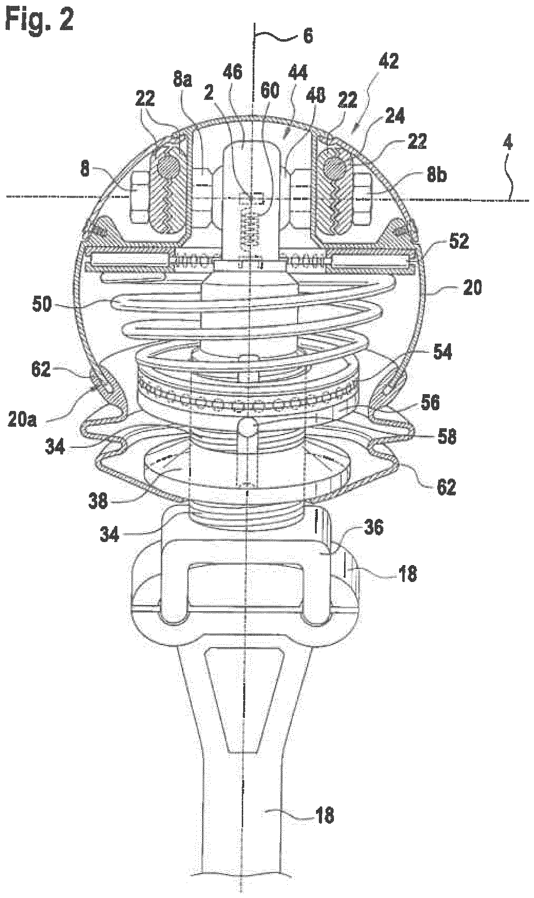

Fig. 2 zeigt einen Teilschnitt einer zweiten Ausführungsform einer Sattellagervorrichtung 42 (Sattel nicht dargestellt). Die Sattellagervorrichtung 42 umfasst, wie die in Fig. 1 gezeigte Sattellagervorrichtung 14, ein Kugelgelenk 44 mit Gelenkkopf 46 und Kugel 48, eine mit dem Gelenkkopf 46 des Kugelgelenks 44 verbundene Gewindestange 34 und einen mit der Gewindestange 34 verbundenen Adapter 36, der zur Verbindung mit einem Rahmenverbindungselement 18, wie beispielsweise einer handelsüblichen Sattelstütze (Patent-Sattelstütze), vorgesehen ist. Der Adapter 36 ermöglicht es, das Lagerelement mit Rahmenverbindungselementen 18 unterschiedlicher Abmessungen zu koppeln. Alternativ kann die Gewindestange 34 und das Rahmenverbindungselement 18 einstückig ausgebildet sein. Ein entlang bzw. parallel zur zweiten Drehachse 4 verlaufender Bolzen 8 greift durch die Kugel 48 und hält Distanzbuchsen 8a und Verbindungselemente 22, an denen das Satteluntergestell 24 befestigt ist, wobei der Bolzen mit einer Mutter 8b zusammen wirkt. Alternativ können die Kugel 48 und das Satteluntergestell 24 einstückig ausgebildet sein. Eine Außenschale 20, innerhalb der sich die Verbindungselemente 22 befinden, ist fest mit der Kugel 48 verbunden.

Ferner umfasst die Sattellagervorrichtung 42 wie in Fig. 1 ein mittels Gewinde verstellbares Keilelement 38 und einen die Position des Keilelements fixierenden Blockierbolzen (nicht gezeigt). Des Weiteren sind abweichend von der in Fig. 1 gezeigten Sattellagervorrichtung 14 die Federelemente, welche das Sattelverbindungselement 16 relativ zum Rahmenverbindungselement 18 in einer Ruhelage halten, in der nach unten hin entlang eines Rands 20a offenen Außenschale 20 integriert. Insbesondere ist eines der Federelemente 50 als Torsionsfeder, etwa als (Kegel-)Druckfeder 50 ausgebildet, welche zwischen einem oberen Lager, etwa einem axialen Drucklager 52 und einem unteren Lager, etwa einem axialen Drucklager 54, die insbesondere Axial-Kugellager, Axial-Nadel- oder Axial-Kegelrollenlager umfassen können, drehbar gelagert ist.

Zur Regulierung der Spannung der Torsions- oder Druckfeder 50 kann der Abstand zwischen dem oberen Lager, hier dem axialen Drucklager 52, und dem unteren Lager, hier dem axialen Drucklager 54, mittels einer auf der Gewindestange 34 verstellbaren Rändelmutter 56 eingestellt werden, welche bei Drehung das untere axiale Drucklager 54 in Richtung des oberen axialen Drucklagers 52 oder davon weg verschiebt und mittels eines Fixierbolzens 58 in einer gewünschten Position fixiert werden kann. Zum Halten des Sattelverbindungselements 16 relativ zum Rahmenverbindungselement 18 in einer Ruhelage können alternativ (Stahl-)Zugfedern vorgesehen sein, die den Gelenkkopf 46 mit der Außenschale 20 oder der Kugel 48 verbinden und diese bei einer Auslenkung des Gelenkkopfes 46 um eine Drehachse den Gelenkkopf 46 mit einer der Drehung entgegenwirkenden Rückstellkraft beaufschlagen. Eine solche Zugfeder 60 ist beispielhaft dargestellt.

Um zu verhindern, dass der Rand 20a der Öffnung der Außenschale 20 unmittelbar auf das Keilelement 38 oder die Gewindestange 34 auftreffen kann, ist an dem Rand 20a und an dem Keilelement 38 eine Gummimanschette oder ein Faltenbalg 62 angebracht, der die Klemmstelle als mögliche Gefahrenstelle zwischen dem Rand der Öffnung 20a und dem Keilelement 38 oder der Gewindestange 34 überdeckt und somit sichert.

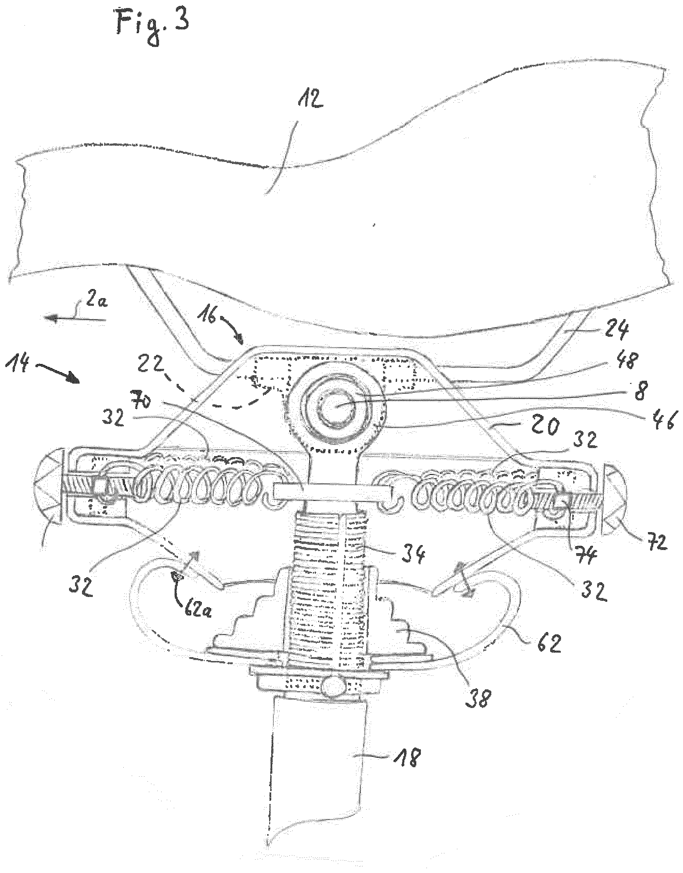

Figur 3 zeigt eine teilweise geschnittene Seitenansicht einer dritten Ausführungsform einer Sattellagervorrichtung 14. Ein Sattel 12 ist über ein Satteluntergestell 24 an Verbindungselementen 22 in Form von an sich bekannten Sattelkloben, die ein Sattelverbindungselement 16 bilden, an der Sattellagervorrichtung 14 befestigt. Analog zu der Ausführung nach Figur 2 durchgreift ein Bolzen 8 jeweils zwei auf einer Seite befindliche Verbindungselemente 22, eine Distanzbuchse 8a auf jeder Seite sowie eine Kugel 48, die ihrerseits in einem Gelenkkopf 46 gelagert ist und das Lagerelement bildet, welches eine Verschwenkung des Sattels 12 um drei Drehachsen zulässt, wie in der zweiten Ausführungsform beschrieben.

Eine starre Außenschale 20 aus Stahlblech o. Ä. ist durch den Bolzen 8 fest mit dem Sattel verbunden und deckt den Gelenkkopf 46 sowie weitere Teile der Sattellagervorrichtung 14 ab. Im Unterschied zu der Ausführungsform nach Figur 2 erstreckt sich die Außenschale 20 in Bezug auf den Gelenkkopf 46 in Fahrtrichtung weiter nach vorn und nach hinten und auch nach links und rechts, um vier Zugfedern 32 aufzunehmen, die zwischen dem Rahmenverbindungselement 18 bzw. der Gewindestange 34 und der Außenschale 20 angeordnet sind und sich in der Ruhelage der Sattelvorrichtung in einer Ebene befinden, die parallel zu der jeweils horizontal verlaufenden ersten und zweiten Drehachse 2, 4 angeordnet ist. Die Anordnung der Federn 32 ist somit funktionsmäßig analog zu der Ausführung nach Figur 1, wobei sich die Federn allerdings in der in Figur 3 dargestellten Ruhelage in der genannten Ebene erstrecken und mit äußeren Enden an der Außenschale 20 befestigt sind und nicht wie in Figur 1 an einem Fixierbügel.

Die Federn 32 erstrecken sich somit in einer Draufsicht in Richtung der dritten Drehachse 6 in einer X-förmigen Anordnung, wobei sie an äußeren Enden an der Außenschale 20 und an inneren Enden über ein Befestigungselement 70 an dem Rahmenverbindungselement 18 gehalten sind. Eine Besonderheit der Ausführung nach Figur 3 besteht noch darin, dass die Federn 32 hinsichtlich ihrer wirksamen Länge einstellbar mit der Außenschale 20 verbunden sind, wobei eine Einstellschraube 72 und ein Schlitten 74 vorgesehen sind, dessen Abstand von dem Verbindungselement 70 bzw. von dem Rahmenverbindungselement 18 durch Verdrehen der Einstellschraube 72 eingestellt werden kann. Obwohl für jede einzelne Feder 32 eine Einstellschraube 72 und ein Schlitten 74 vorgesehen sein könnten, sieht die Ausführungsform nach Figur 3 bevorzugt vor, dass sich der Einstellschlitten 74 in Richtung der zweiten Drehachse 4, d. h. quer zur Fahrtrichtung, erstreckt und an seinen Enden jeweils ein Ende einer Feder 32 trägt. In diesem Fall befindet sich jeweils eine Einstellschraube 72 vorn und hinten an der Sattellagervorrichtung 14, so dass mit jeder Einstellschraube 72 beide Federn 32 vorn und hinten gemeinsam verstellt werden können.

Ein Keilelement 38, das wie dargestellt alternativ stufenförmig ausgebildet sein kann, ist auf dem Rahmenverbindungselement 18 bzw. der Gewindestange 34 höhenverstellbar angeordnet und verhindert einen unmittelbaren Kontakt der Außenschale 20 mit der Gewindestange bzw. dem Rahmenverbindungselement. Eine Gummimanschette 62 ist mittels schraub- oder steckbaren Verbindungselementen 62a mit der Außenschale 20 verbunden und bildet einen Schutz gegen Verletzungen durch Einklemmen.

Weiterhin kann die Sattellagervorrichtung 14 einen Impulsgeber (bspw. einen Magnetfühler oder einen Schalter), der bei einer Auslenkung des Sattelverbindungselements 16 relativ zum Rahmenverbindungselement 18 einen Impuls erzeugt, umfassen. Der Impuls kann über Funk oder kabelgebunden an ein elektronisches Gerät übermittelt werden, bspw. an eine an oder in der Sattellagervorrichtung angeordnete Speichereinheit oder an einen Fahrradtacho. Das Gerät kann beispielsweise dazu eingerichtet sein kann, die Zahl der empfangenen Impulse und ggf. zusätzlich die Größe der jeweiligen Auslenkung zu zählen und zu speichern oder darzustellen. Ferner kann die Sattellagervorrichtung 14 eine Einrichtung zur Messung der Relativbewegung zwischen dem Sattelverbindungselement 16 und dem Rahmenverbindungselement 18 umfassen, die insbesondere dazu eingerichtet sein kann, ein gemessenes Ausmaß der Relativbewegung zu erfassen, zu speichern und darzustellen oder zu einem Bewegungsprofil zu verarbeiten.

### BEZUGSZEICHENLISTE

- 2: erste Drehachse
- 2a: Fahrtrichtung
- 4: zweite Drehachse
- 6: dritte Drehachse
- 8: Bolzen
- 8a: Distanzbuchse
- 8b: Mutter
- 12: Sattel
- 14: Sattellagervorrichtung
- 16: Sattelverbindungselement
- 18: Rahmenverbindungselement (Sattelstütze)
- 20: Außenschale
- 20a: Rand
- 22: Verbindungselement (Sattelkloben)
- 24: Satteluntergestell
- 26: Sitzfläche
- 28: Federung
- 30: Fixierbügel
- 32: Federelement
- 34: Gewindestange
- 36: Adapter
- 38: Keilelement
- 40: Blockierbolzen
- 42: Sattellagervorrichtung
- 44: Kugelgelenk
- 46: Gelenkkopf
- 48: Kugel
- 50: Federelement
- 52: axiales Drucklager
- 54: axiales Drucklager
- 56: Rändelmutter
- 58: Fixierbolzen
- 60: Zugfeder
- 62: Gummimanschette
- 62a: Verbindungselement
- 70: Verbindungselement
- 72: Einstellschraube
- 74: Schlitten

## Patentansprüche

1. Sattellagervorrichtung (14, 42), umfassend:
ein Sattelverbindungselement (16), ausgebildet zum Verbinden eines Sattels (12) mit der Sattellagervorrichtung (14, 42);
ein Rahmenverbindungselement (18), ausgebildet zum Verbinden der Sattellagervorrichtung (14, 42) mit einem Rahmen eines Sportgeräts; und
ein Lagerelement (44), welches das Sattelverbindungselement (16) mit dem Rahmenverbindungselement (18) koppelt;
wobei das Lagerelement (44) drei senkrecht zueinander angeordnete Drehachsen (2, 4, 6) bildet, die sich in einem Punkt schneiden und um die sich das Sattelverbindungselement (16) relativ zum Rahmenverbindungselement (18) drehen kann,
**dadurch gekennzeichnet, dass** das Lagerelement ein Kugelgelenk (44) aufweist, das eine Kugel (48) und einen die Kugel (48) drehbar aufnehmenden Gelenkkopf (46) umfasst, wobei ein Bolzen (8), der entlang einer Drehachse (4) der Kugel (48) angeordnet ist, die Kugel (48) und auf jeder Seite der Kugel (48) angeordnete Verbindungselemente (22) und Distanzbuchsen (8a) durchgreift und an der Kugel (48) fixiert, wobei ein Satteluntergestell (24) des Sattels (12) über die Verbindungselemente (22) in Form von an sich bekannten Sattelkloben, die ein Sattelverbindungselement (16) bilden, an der Sattellagervorrichtung (14) befestigt ist.

2. Sattellagervorrichtung (14, 42) nach Anspruch 1, ferner umfassend:
ein Rückstellelement (32, 50), welches an dem Sattelverbindungselement (16) und dem Rahmenverbindungselement (18) befestigt ist und dazu eingerichtet ist, das Sattelverbindungselement (16) relativ zum Rahmenverbindungselement (18) in einer Ruhelage zu halten.

3. Sattellagervorrichtung (14, 42) nach Anspruch 2, wobei das Rückstellelement ein Federelement (32, 50) umfasst.

4. Sattellagervorrichtung (14, 42) nach Anspruch 3, wobei das Federelement (32) mindestens eine Zugfeder, insbesondere aus Stahl umfasst.

5. Sattellagervorrichtung (14, 42) nach Anspruch 3 oder 4, wobei das Federelement (50) mindestens eine Druckfeder, Torsionsfeder oder Kegelfeder, aus Metall oder Elastomer, insbesondere Polymer, umfasst und insbesondere einen Teil des Rahmenverbindungselements (18) in einer Umfangsrichtung umschließt.

6. Sattellagervorrichtung (14, 42) nach einem der Ansprüche 2 bis 5, ferner umfassend ein weiteres Rückstellelement, wobei das weitere Rückstellelement als Zugfeder (60), insbesondere als Stahlzugfeder ausgebildet ist.

7. Sattellagervorrichtung nach einem der vorangehenden Ansprüche, **gekennzeichnet durch** einen Sensor zur Erfassung einer Schwenkbewegung des Sattelverbindungselements (16) relativ zu dem Rahmenverbindungselement (18).

8. Sattellagervorrichtung nach Anspruch 7, **dadurch gekennzeichnet, dass** eine Schwenkbewegung um jede Drehachse (2, 4, 6) getrennt erfassbar ist.

9. Sattellagervorrichtung nach einem der Ansprüche 7 oder 8, **dadurch gekennzeichnet, dass** eine Winkelauslenkung einer jeden Schwenkbewegung quantitativ erfassbar ist.

10. Sattellagervorrichtung nach einem der Ansprüche 7 bis 9, **dadurch gekennzeichnet, dass** erfasste Sensorinformationen in einer an der Sattellagervorrichtung angeordneten Speichereinheit digital speicherbar und über eine drahtlose oder verdrahtete Schnittstelle auslesbar sind.

11. Sportgerät, insbesondere Fahrrad mit zwei oder drei Rädern, umfassend eine Sattellagervorrichtung (14, 42) nach einem der vorangehenden Ansprüche.

## Claims

1. Saddle bearing device (14, 42), comprising:
a saddle connecting element (16) for connecting a saddle (12) to the saddle bearing device (14, 42);
a frame coupling element (18) for connecting the saddle bearing device (14, 42) to a frame of a sports apparatus; and
a bearing element (44), which joins the saddle connecting element (16) to the frame coupling element (18);
the bearing element (44) forming three axes of rotation (2, 4, 6) arranged perpendicularly to each other, which intersect at one point and can rotate around the saddle connecting element (16) relative to the frame coupling element (18), **characterized in that** the bearing element has a ball joint (44), which comprises a ball (48) and a ball joint head (46) rotationally holding the ball (48), wherein a pin (8), which is arranged along an axis of rotation (4) of the ball (48), penetrates the ball (48) and connecting elements (22) arranged on each side of the ball (48) and spacer bushings (8a) and fixes these on the ball (48), a saddle underframe (24) of the saddle (12) being fastened on the saddle bearing device (14) by means of the connecting elements (22) in the form of saddle clamps known per se, which form a saddle connecting element (16).

2. Saddle bearing device (14, 42) according to claim 1, furthermore comprising:
a reset element (32, 50), which is fastened to the saddle connecting element (16) and the frame coupling element (18) and is designed to keep the saddle connecting element (16) in a rest position relative to the frame coupling element (18).

3. Saddle bearing device (14, 42) according to claim 2, wherein the reset element comprises a spring element (32, 50).

4. Saddle bearing device (14, 42) according to claim 3, wherein the spring element (32) comprises at least one tension spring, in particular made of steel.

5. Saddle bearing device (14, 42) according to claim 3 or 4, wherein the spring element (50) comprises at least one compression spring, torsion bar or conical spring, made of metal or elastomer, in particular polymer, and encloses in particular a part of the frame coupling element (18) in a circumferential direction.

6. Saddle bearing device (14, 42) according to one of claims 2 to 5, furthermore comprising a further reset element, wherein the further reset element is formed as tension spring (60), in particular as steel tension spring.

7. Saddle bearing device according to one of the preceding claims, **characterized by** a sensor for detecting a swiveling movement of the saddle connecting element (16) relative to the frame coupling element (18).

8. Saddle bearing device according to claim 7, **characterized in that** a pivot movement around each axis of rotation (2, 4, 6) can be detected separately.

9. Saddle bearing device according to either of claims 7 or 8, **characterized in that** an angle deflection of each pivot movement can be detected quantitatively.

10. Saddle bearing device according to one of claims 7 to 9, **characterized in that** recorded sensor information can be digitally stored in a memory arranged on the saddle bearing device and can be read via a wireless or wired interface.

11. Sports apparatus, in particular bicycle with two or three wheels, comprising a saddle bearing device (14, 42) according to one of the preceding claims.

## Revendications

1. Dispositif de palier de selle (14, 42), composé des éléments suivants :
un élément de raccordement de selle (16) pour raccorder une selle (12) au dispositif de palier de selle (14, 42)
un élément de raccordement de cadre (18) pour raccorder le dispositif de palier de selle (14, 42) à un cadre d'un appareil de sport et
un élément de palier (44) qui relie l'élément de raccordement de selle (16) à l'élément de raccordement de cadre (18)
l'élément de palier (44) forme trois axes de rotation (2, 4, 6) disposés à la perpendiculaire les uns par rapport aux autres, avec un point d'intersection et un axe de rotation autour de l'élément de raccordement de selle (16) par rapport à l'élément de raccordement de cadre (18), **se caractérisant par le fait que** l'élément de palier a un joint à rotule (44), qui se compose d'une rotule (48) et d'une tête sphérique (46) qui maintient en rotation la rotule (48), et une broche (8), qui est implantée le long d'un axe de rotation (4) de la rotule (48), pénètre la rotule (48) et des éléments de raccordement (22) disposés de part et d'autre de la rotule (48) et des bagues d'écartement (8a), et vient les fixer sur la rotule (48) ; un soubassement de selle (24) pour la selle (12) vient se fixer sur le dispositif de palier de selle (14) par le biais des éléments de raccordement (22) par l'entremise de colliers de serrage de selle proprement dits, qui constituent un élément de raccordement de selle (16).

2. Le dispositif de palier de selle (14, 42) que décrit la revendication 1, si ce n'est qu'il comporte, en outre :
un élément de réinitialisation (32, 50), qui vient se rattacher à l'élément de raccordement de selle (16) et à l'élément de raccordement de cadre (18) et est conçu pour maintenir l'élément de raccordement de selle (16) en position de repos par rapport à l'élément de raccordement de cadre (18).

3. Le dispositif de palier de selle (14, 42) que décrit la revendication 2, si ce n'est que l'élément de réinitialisation comporte un élément à ressort (32, 50).

4. Le dispositif de palier de selle (14, 42) que décrit la revendication 3, si ce n'est que l'élément à ressort (32) comporte au moins un ressort de tension, plus particulièrement, un ressort en acier.

5. Le dispositif de palier de selle (14, 42) que décrit la revendication 3 ou 4, si ce n'est que l'élément à ressort (50) comporte au moins un ressort de compression, une barre de torsion ou un ressort conique, en métal ou en élastomère, en particulier un polymère, et enveloppe, en particulier, une partie de l'élément de raccordement de cadre (18), dans un sens circonférentiel.

6. Le dispositif de palier de selle (14, 42) que décrit l'une ou l'autre des revendications 2 à 5, si ce n'est qu'il comporte un élément supplémentaire de réinitialisation et que cet élément supplémentaire de réinitialisation se présente sous la forme d'un ressort de tension (60), en particulier, un ressort de tension en acier.

7. Le dispositif de palier de selle que décrit l'une ou l'autre des revendications précédentes, si ce n'est qu'il comporte un détecteur qui détecte un mouvement de pivotement de l'élément de raccordement de selle (16) par rapport à l'élément de raccordement de cadre (18).

8. Le dispositif de palier de selle que décrit la revendication 7, si ce n'est qu'il se **caractérise par le fait qu'**un mouvement de pivotement autour de chaque axe de rotation (2, 4, 6) peut être détecté séparément.

9. Le dispositif de palier de selle que décrit la revendication 7 ou 8, si ce n'est qu'il se **caractérise par le fait qu'**une déflexion angulaire de chaque mouvement de pivotement peut être détectée, de manière quantitative.

10. Le dispositif de palier de selle que décrit l'une ou l'autre des revendications 7 à 9, si ce n'est qu'il se **caractérise par le fait que** les informations enregistrées provenant du capteur peuvent être conservées sous format numérique dans une mémoire implantée sur le dispositif de palier de selle et peuvent être lues par l'entremise d'une interface avec ou sans fil.

11. Un appareil de sport, en particulier un vélo à deux ou trois roues qui est équipé un dispositif de palier de selle (14, 42) que décrit l'une ou l'autre des revendications précédentes.
